Europäisches Patentamt

European Patent Office

Office européen des brevets

(19)

(11) Veröffentlichungsnummer: **0 490 412 B1**

(12) # EUROPÄISCHE PATENTSCHRIFT

(45) Veröffentlichungstag der Patentschrift: **28.06.95**

(21) Anmeldenummer: **91121873.3**

(22) Anmeldetag: **17.03.87**

(60) Veröffentlichungsnummer der früheren Anmeldung nach Art. 76 EPÜ: **0 238 043**

(51) Int. Cl.⁶: **B65H  23/00**, B65H 35/02, B29D 11/00, B41F 13/02, B41F 19/02, D01D 5/42, //D21H21/42

(54) **Verfahren zur registergenauen Bearbeitung von Folien.**

(30) Priorität: **18.03.86 DE 3609090**

(43) Veröffentlichungstag der Anmeldung:
**17.06.92 Patentblatt  92/25**

(45) Bekanntmachung des Hinweises auf die Patenterteilung:
**28.06.95 Patentblatt  95/26**

(84) Benannte Vertragsstaaten:
**AT BE CH DE ES FR GB IT LI LU NL SE**

(56) Entgegenhaltungen:
DE-A- 1 436 531    DE-A- 1 597 641
DE-A- 1 921 182    DE-A- 3 432 712
DE-C- 177 280    FR-A- 2 126 500
GB-A- 1 067 514    US-A- 3 241 429
US-A- 3 666 587

PATENT ABSTRACTS OF JAPAN vol. 8, no. 73 (M-287)(1510) 5. April 1984 (MATSUSHITA DENKI SANGYO K.K. )

(73) Patentinhaber: **GAO Gesellschaft für Automation und Organisation mbH**
**Postfach 70 07 03**
**D-81307 München (DE)**

(72) Erfinder: **Kaule, Wittich, Dr.**
**Lindacher Weg 13**
**W-8089 Emmering (DE)**

(74) Vertreter: **Klunker . Schmitt-Nilson . Hirsch**
**Winzererstrasse 106**
**D-80797 München (DE)**

## Beschreibung

Die Erfindung betrifft ein Verfahren zur registergenauen Bearbeitung von Folien, wobei die Bearbeitung mindestens zwei voneinander unabhängige Bearbeitungsvorgänge umfaßt und die Bearbeitung der Folie ab dem zweiten Bearbeitungsvorgang registergenau zum ersten Bearbeitungsvorgang ausgeführt wird, wobei in einem ersten Bearbeitungsschritt in die Folie eine mechanisch abgreifbare Reliefstruktur eingebracht wird.

Folien mit einer eingeprägten Reliefstruktur, insbesondere einer Linsenstruktur, werden häufig bei der Herstellung von Postkarten verwendet, um besondere visuelle Effekte zu erzeugen. Durch die fokussierende Wirkung von beispielsweise Zylinderlinsen ist es möglich, Teilbereiche eines unter den Linsen angeordneten Druckbildes für bestimmte Betrachtungswinkel auszublenden, d. h. bestimmte Informationen können nur unter definierten Betrachtungswinkeln beobachtet werden. Mit Hilfe der optischen Eigenschaften des Linsenrasters können also mehrere, Informationen auf einem Trägermaterial vorgesehen werden, die jede für sich gesehen, nur unter einem definierten Betrachtungswinkel erkennbar sind. Bei entsprechender Gestaltung des Druckbildes kann jedoch der Eindruck einer Bewegung hervorgerufen werden. Für all diese Anwendungen ist allerdings die besondere Ausgestaltung des Druckbildes, bei welcher die Linsengeometrie berücksichtigt werden muß, um möglichst eindrucksvolle winkelabhängige Effekte erzeugen zu können, sowie die exakte Ausrichtung von Linsenraster und Druckbild zueinander von großer Bedeutung. Im Fall von Zylinderlinsen beispielsweise wird das Druckbild in parallele Streifen zerlegt, die alle in der Fokusebene der Linsen, jeder einzelne jedoch unter jeweils einer Linse angeordnet werden. Das Streifenmuster wird entweder auf einen separaten Träger gedruckt, der anschließend registerhaltig mit der Linsenrasterfolie verklebt wird, oder die geprägte Folie wird direkt auf ihrer planen Unterseite bedruckt.

Ein derartiges Verfahren ist beispielsweise aus der DE-A-1 597 641 bekannt. Um die Registerführung zwischen Linsenraster und Druckbild überprüfen zu können, werden im Bereich der einzelnen Bildränder Markierungen, z. B. dünne Linien, vorgesehen, die mit dem gewünschten Druckbild übertragen werden. Direkt nach dem Druckvorgang kontrolliert ein optischer Sensor kontinuierlich die konkrete Überdeckung des Linsenrasters mit der Markierung. Bei einer Abweichung sorgt der Sensor für ein Abschalten der Vorrichtung oder gegebenenfalls ein selbsttätiges Einregulieren. Diese Vorgehensweise hat den großen Nachteil, daß eine Abweichung erst im Nachhinein festgestellt wird und somit hohe Ausschußraten produziert werden.

Ferner eignet sich dieses Verfahren aufgrund der zeitraubenden Verfahrensschritte "Stoppen, Justieren und erneutes Starten" wenig für eine kostengünstige Herstellung von Produkten mit hohen Durchsatzraten.

Das aus der US-A-3,241,429 bekannte Verfahren dagegen reguliert die Registerführung zwischen geprägter Folie und Druckbild während des Druckvorgangs, wobei die geprägte Folie auf ihre Bahneigenschaften reduziert wird, um auf die in der Drucktechnik üblichen Methoden zur Registerführung zurückgreifen zu können. Dies bedeutet, bei der Prägung der Folienbahn wird eine Kante der Bahn parallel zur Linsenachse geschnitten, um so eine Führungskante zu erzeugen, anhand derer im folgenden die Ausrichtung zwischen Folie und Druckwerk vorgenommen werden kann. Aber auch hier sind zusätzliche Maßnahmen, wie das exakte Schneiden der Bahnkante, notwendig, um die Folie gegenüber den Bearbeitungsmaschinen ausrichten zu können.

Der Erfindung liegt daher die Aufgabe zugrunde, ein einfaches Verfahren zur Bearbeitung von geprägten Folien vorzuschlagen, das auf zusätzliche Maßnahmen zur Registerführung verzichtet und die genannten Nachteile des Stands der Technik vermeidet.

Diese Aufgabe wird durch die im Kennzeichen des Anspruchs 1 enthaltenen Merkmale gelöst.

Das erfindungsgemäße Verfahren wird vorzugsweise zur Herstellung eines Sicherheitsfadens für Sicherheitsdokumente eingesetzt.

Der Sicherheitsfaden, der aus einem transparenten Material, vorzugsweise Kunststoff, besteht, hat in der Regel eine rechteckige Querschnittsstruktur und eine Breite von ca. 0,5 mm bis 2 mm, wobei in einer bevorzugten Ausführungsform auf einer Oberfläche ein Raster aus mehreren parallel laufenden Zylinderlinsen eingeprägt ist. Die Dicke des Sicherheitsfadens ist dabei so gewählt, daß sie in etwa der Fokuslänge der Zylinderlinsen entspricht. Auf der gegenüberliegenden Oberfläche ist ein Druckbild aufgebracht. Das Druckbild ist unter Berücksichtigung der optischen Eigenschaften der Zylinderlinsen gestaltet. Aufgrund der fokussierenden Wirkung der Zylinderlinsen und der Lage des Druckbilds in der Fokusebene sind je nach Blickwinkel unterschiedliche Teilbereiche des Druckbilds sichtbar. Durch entsprechende Gestaltung des Druckbilds können damit Informationen eingebracht werden, die nur unter bestimmten Blickwinkeln sichtbar sind. Es können aber auch "bewegte" Bilder erzeugt werden, wobei das Druckbild so gestaltet ist, daß bei Drehung des Dokuments um eine zu den Zylinderlinsen parallel laufenden Achse sich ein Motiv nahezu kontinuierlich von einem Ort auf dem Sicherheitsfaden zu einem anderen Ort bewegt.

Bei der Herstellung dieser Sicherheitsfäden ist daher darauf zu achten, daß die Druckstreifen in präziser Ausrichtung zu den Zylinderlinsen auf dem Trägerblatt aufgebracht werden. Insbesondere bei Verwendung von Zylinderlinsen mit kleiner Linsenbreite ( 100 µ) stellt die Erstellung eines entsprechend feinen Druckbildes sowie das registergenaue Aufdrucken der einzelnen Streifenbilder in Relation zu den Zylinderlinsen hohe Anforderungen.

Mit speziellen Drucktechniken (z. B. nach den Folientiefdruck- oder Näpfchentiefdruck-Verfahren) sowie über geeignete Verfahren, die Gegenstand der vorliegenden Erfindung sind, ist es aber möglich, sogenannte Mikrodruckbilder herzustellen und diese registergenau zu den Zylinderlinsen auf den Träger aufzubringen. Damit ist es nun möglich, derartige Elemente als Sicherheitselemente zu verwenden und diese in Form von Fäden in Sicherheitsdokumente einzubetten. Wegen seiner schwierigen technischen Gestaltung zeichnet sich dieser Faden durch eine besonders hohe Fälschungssicherheit aus.

Der Sicherheitsfaden hat weiterhin den Vorteil, daß er mit einem sicherheitstechnisch hochwertigen Mikrodruckbild versehen werden kann, wobei dieses an sich mit bloßem Auge nur sehr schwer auflösbare Druckbild ohne technische Hilfsmittel prüfbar ist, da es nun durch darüberliegenden Zylinderlinsen vergrößert wird.

Der Sicherheitsfaden kann nach den herkömmlichen Verfahren in das Sicherheitsdokument eingebettet werden. Bei der Einbettung in Papier werden zur besseren Sichtbarmachung vorzugsweise Fenster in die den Faden überlagernde Papierschicht eingebracht. Wertpapiere mit im Fensterbereich freiliegenden Fäden sowie Verfahren zur Herstellung derselben sind z. B. aus der DE-C-214 838, DE-C-341 970 oder DE-A-27 43 019 bekannt. Der Faden kann aber auch so eingebettet werden, daß er nur von einer dünnen Papierschicht überdeckt ist, so daß die Sichtbarkeit des Fadens nur unwesentlich eingeschränkt wird.

Durch die darüberliegende Papierschicht wird gleichzeitig die Oberflächenstruktur des Fadens gegen Abrieb geschützt. Zudem haften insbesondere die Fäden, bei denen die Zylinderlinsen quer zur Fadenrichtung verlaufen, sehr gut im Papier, da die Fadenstruktur und die Papierfaserstruktur ineinandergreifen. Ein derartiger Faden kann nicht ohne Zerstörung des Papierblatts aus dem Papier "herausgezogen" werden.

Die Fäden selbst werden vorzugsweise so hergestellt, daß auf breite Folienbahnen zunächst die Zylinderlinsenraster eingeprägt und dann auf die gegenüberliegenden Seite der Folie das Druckbild aufgedruckt wird. Diese Folienbahnen werden anschließend in einzelne Streifen mit der gewünschten Sicherheitsfadenbreite geschnitten.

Diese Zylinderlinsen werden erfindungsgemäß zur Ausrichtung und Justierung der Folie in den folgenden Bearbeitungsschritten (Drucken, Schneiden) verwendet. Die Führungselemente (Rollen, Walzen, etc.) der dabei zur Anwendung kommenden Werkzeuge, wie z. B. der Druck- oder Schneidevorrichtung, werden hierzu mit einer zum Linsenraster komplementären Reliefstruktur ausgebildet. Beim Durchgang der Folie durch diese Führungselemente greifen das Linsenraster und die Reliefstruktur ineinander, so daß die Folie beim Durchgang in exakter geometrischer Zuordnung zum Linsenraster bedruckt, geschnitten oder noch anderweitig bearbeitet werden kann.

Durch das erfindungsgemäße Verfahren können Folien nun in einfacher Weise registergenau und vor allem über große Längen zu einer auf der gegenüberliegenden Seite befindlichen Prägestruktur bedruckt werden. In der gleichen Weise kann diese Prägestruktur auch zum registergenauen Schneiden der Folie in einzelne Streifen genutzt werden, die dann als Sicherheitsfäden in Ausweiskarten oder Banknoten eingebettet werden können.

Über dieses Verfahren können auch andere Sicherheitsfäden mit geringen Breiten (ca. 0,5 mm) hergestellt werden, die z. B. ein längs des Fadens verlaufendes, z. B. mehrfarbiges, Druckmuster aufweisen. Dabei werden im ersten Verfahrensschritt in eine Folie Rillen im Abstand der gewünschten Breite der Sicherheitsfäden eingeprägt. Die Bedruckung erfolgt im Anschluß daran, wobei die Folie anhand dieser Rillen gegenüber den Druckwerken ausgerichtet wird und z. B. auf die den Rillen gegenüberliegende glatte Folienoberfläche ein Druckbild aufgebracht wird. Nach dem Druckvorgang wird die Folie wiederum in Relation zur Lage der Rillen in einzelne Streifen geschnitten. Die so hergestellten Folienstreifen haben dann ein zu den äußeren Abmessungen der Streifen exakt plaziertes Druckbild.

Weitere Vorteile und vorteilhafte Weiterbildungen sind Gegenstand der Unteransprüche und der Beschreibung anhand der Figuren.

Die Figuren zeigen:

Fig. 1 ein Wertpapier mit darin eingelagertem Sicherheitsfaden in einer Schnittansicht,

Fig. 2 einen Sicherheitsfaden in einer Schnittansicht,

Fig. 3 eine schematische Darstellung einer speziellen Ausführungsform,

Fig. 4 eine Prinzipdarstellung einer Vorrichtung zur Herstellung dieser Sicherheitsfäden,

Fig. 5a, b eine Folie und eine entsprechende Führungswalze,

Fig. 6 Schneidevorrichtung,

Fig. 7a, b     eine weitere Folie mit entsprechender Führungswalze.

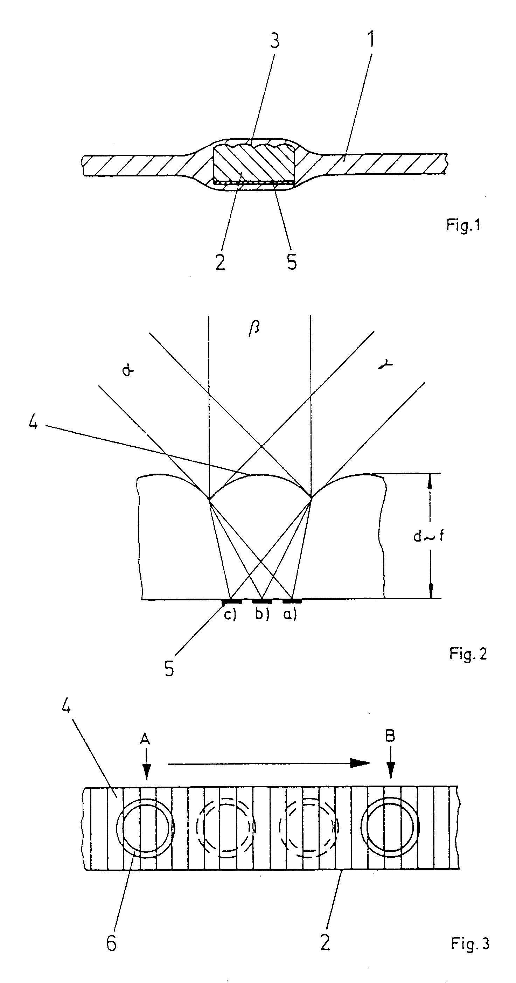

Die Fig. 1 zeigt ein Sicherheitsdokument 1 in einer Schnittansicht. Das Sicherheitsdokument ist z. B. eine Banknote oder ein Wertpapier, bestehend aus einer ein- oder mehrlagigen Papierschicht, in dessen Inneren ein Sicherheitsfaden 2 eingelagert ist. Der Sicherheitsfaden besteht aus einem transparenten Material, z. B. Kunststoff, in dessen eine Oberfläche eine Reliefstruktur 3 in Form mehrerer parallel nebeneinander angeordneter Zylinderlinsen 4 eingeprägt ist (Fig. 2). Auf der gegenüberliegenden Oberfläche ist ein Druckbild aufgebracht, das sich im Prinzip, wie in Fig. 2 gezeigt, aus mehreren Einzelstreifen, z. B. drei Streifen, a, b und c, zusammensetzt. Die einzelnen Streifen sind unter verschiedenen Betrachtungswinkeln $\alpha$, $\beta$, $\gamma$ getrennt sichtbar. Sind die Streifen z. B. einzelne Farbstreifen mit unterschiedlicher Farbgebung, so wechselt der Sicherheitsfaden unter leichtem Kippen des Dokuments seine Farbe. Das Druckbild kann aber auch so gestaltet werden, daß sich die Einzelstreifen, die unter einem Betrachtungswinkel gleichzeitig sichtbar sind, z. B. die mit a) gekennzeichneten Streifen, ein sich über die gesamte Fadenbreite und -länge erstreckendes Motiv wiedergeben. Der Faden kann damit mehrere, unter anderem voneinander unabhängige Informationen in sich bergen, die dann unter verschiedenen Betrachtungswinkeln getrennt auslesbar sind.

Eine weitere Gestaltungsmöglichkeit ist in der Fig. 3 gezeigt. Die Zylinderlinsen 4 verlaufen hier quer zur Fadenrichtung. Ein Motiv, z. B. ein Ring 6 ist in sich wiederholenden Abständen so in Korrelation zu den Zylinderlinsen aufgedruckt, daß sich dessen Lage auf den Faden mit Änderung des Betrachtungswinkels verschiebt und das Motiv sich unter leichtem Kippen von einer ersten Position A zu einer zweiten Position B bewegt. Dem Betrachter wird damit der Eindruck eines sich "bewegenden" Bildes vermittelt. Das Motiv, in diesem Fall ein Ring, muß hierzu natürlich in entsprechende Streifenbilder zerlegt und diese Einzelstreifen bezüglich der Lage der Zylinderlinsen so aufgedruckt werden, daß sich diese Streifen bei Betrachtung des Fadens durch die Zylinderlinsen wieder zu einem Ring zusammensetzen und sich dessen Lage auf dem Faden unter Veränderung des Blickwinkels verschiebt. Die Einzelstreifen, die zur Darstellung eines Rings beitragen, werden dazu in Laufrichtung des Fadens jeweils um eine bestimmte Strecke gegenüber der Zylinderlinsenmitte versetzt aufgedruckt. Die Verwendung der Kippbildeffekte auf quergestreiften Sicherheitsfäden ist selbstverständlich ebenso möglich, wie die des Bewegungsbildeffektes bei längsgestreiften Fäden. Eine Kombination beider Effekte auf einem Sicherheitsfaden ist ebenso denkbar.

Die Dicke d des Sicherheitsfadens und der Krümmungsradius der Zylinderlinsen ist in Abhängigkeit des Brechungsindex des Fadenmaterials so gewählt, daß das Druckbild möglichst in der Fokusebene der Zylinderlinsen liegt.

Sicherheitsdokumente wie z. B. Banknoten haben im allgemeinen eine Dicke von ca. 100 $\mu$. Der darin eingebettete Faden sollte daher eine Gesamtdicke d von ca. 70 $\mu$ nicht überschreiten. Der erforderliche Krümmungsradius der Zylinderlinsen errechnet sich unter Annahme eines Brechungsindex des Fadenmaterials von 1,5, wie bei Kunststoffen allgemein üblich, nach der Formel d = 3 x r = f, wobei f die Brennweite der Linse ist. Bei der genannten Foliendicke erhält man demnach etwa 20 Linsen pro mm. Die in Fig. 2 dargestellten Streifen a, b, c (statt Schriftzeichen, etc.) sind in diesem Fall mit einer jeweiligen Streifenbreite von etwa 16 $\mu$ aufzudrucken.

Wählt man bei einer Foliendicke von etwa 70 $\mu$ ein Linsenraster von 10 Linsen pro mm mit entsprechend größerem Krümmungsradius, so werden die einzelnen Streifen des Druckmusters einerseits nur mehr unscharf wiedergegeben, was andererseits aber die Möglichkeit gibt, die Streifen mit doppelter Breite aufzudrucken, was technisch einfacher zu realisieren ist. Da die Streifen ohnehin jeweils über die gesamte Linsenbreite nur einen homogenen Farbeindruck gestatten, ist diese Unschärfe der Linien über die Breite des Sicherheitsfadens für den Gesamteindruck nicht störend.

Obwohl bei der letztgenannten Ausführungsform die Streifenbreite etwa 30 $\mu$ betragen kann, stellt ein derartiges Druckmuster noch immer höchste Anforderungen an die Druckqualität. Für mit einfachen Mitteln ausgestattete Fälscher ist ein derartiges Druckmuster nicht nachvollziehbar. Trotz dieses feinen Linienmusters ist der Sicherheitsfaden aber vom Betrachter ohne Hilfsmittel wie Lupen oder dergleichen prüfbar, da für ihn unter den jeweiligen Betrachtungswinkeln großflächige Farbeffekte erkennbar sind, die sich jeweils über die ganze Sicherheitsfadenbreite erstrecken.

Anstatt der Zylinderlinsen können auch andere Prägestrukturen, die ebenfalls eine fokussierende Wirkung haben, z. B. Kugellinsen oder Wabenlinsen, vorgesehen werden. Das Druckbild ist dann selbstverständlich den optischen Verhältnissen der jeweiligen Linsenart anzupassen.

In einer weiteren Ausführungsform wird die optische Struktur, wie z. B. die Linsenstruktur, auf zwei sich gegenüberliegenden Oberflächen eines im wesentlichen rechtwinkligen Sicherheitsfadens aufgebracht und das Druckbild dementsprechend vorzugsweise in der Mittenebene des Fadens angeordnet. Die sich gegenüberliegenden Linsen können dabei gleichgeartet sein sowie deckungsgleich als auch versetzt zueinander angeordnet werden.

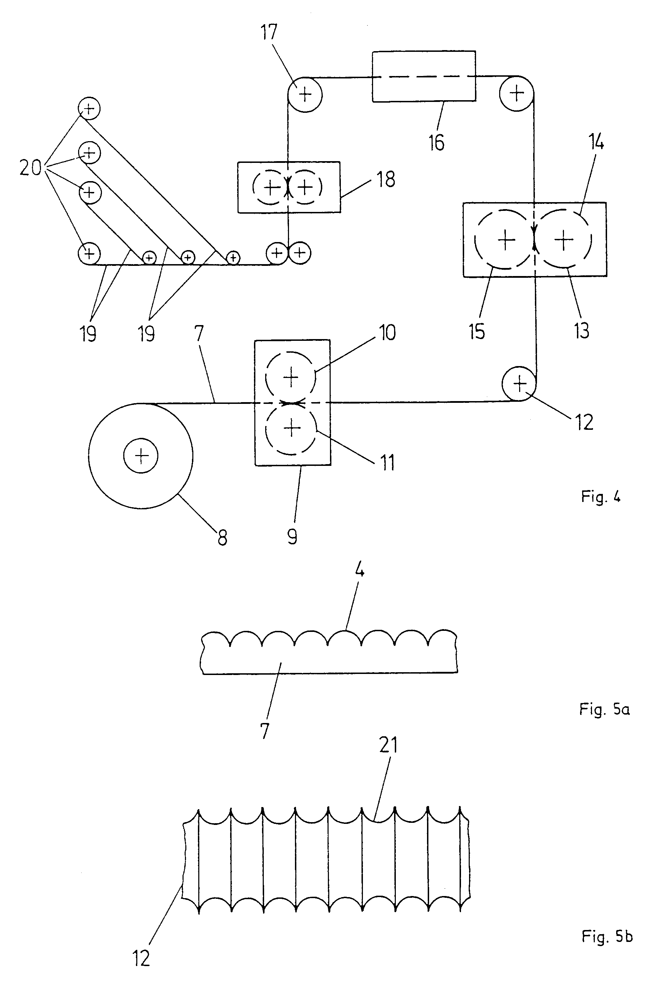

Die Fig. 4 zeigt eine Vorrichtung zur Herstellung von Sicherheitsfäden, wobei die Zylinderlinsen in Längsrichtung des Fadens verlaufen.

Eine breite Folienbahn 7 wird von einer Vorratsrolle 8 abgenommen und einer Prägestation 9 zugeführt, in der z. B. mittels einer Kalanderwalze 10 und einer Gegenwalze 11 die Zylinderlinsen in Längsrichtung zur Folienbahn eingeprägt werden. Die geprägte Folienbahn wird dann über eine Führungsrolle 12 umgelenkt und der Druckvorrichtung 13 zugeführt, in der auf die ungeprägte Seite der Folie das Druckbild aufgebracht wird. Die Druckvorrichtung 13 enthält eine oder mehrere Druckzylinder 14 mit gegenüberliegenden Gegenwalzen 15. Zwischen den einzelnen Druckzylindern kann die Folie wieder über Führungsrollen geleitet werden, um eine registergenaue Führung der Folie zu den einzelnen Druckwerken zu gewährleisten. Zur Trocknung des Drucks wird die Folie anschließend in eine Trockenstation 16 geleitet, so daß die Folie nach Umkehrung über eine weitere Führungsrolle 17 einer Schneidestation 18 zugeführt werden kann. Dort wird die Folienbahn in Streifen bzw. Fäden 19 geschnitten und die Streifen bzw. Fäden auf separaten Rollen 20 aufgewickelt.

Erfindungsgemäß sind zumindest die Führungsrollen 12 und 17 mit einer zu der in der Prägestation in die Folie eingearbeiteten Linsenraster negativen Reliefstruktur 21 ausgestattet. In der Fig. 5a ist die Folie mit den eingeprägten Zylinderlinsen 4 gezeigt und in der Fig. 5b die dazu korrespondierenden Führungswalzen 12 bzw. 17 mit der entsprechenden Negativstruktur 21. Diese Führungsrollen sind in fester, räumlicher Zuordnung zu den Druck- oder Schneidevorrichtungen montiert, so daß auf diese Weise sichergestellt ist, daß die Folie immer in richtiger geometrischer Zuordnung zu den bereits auf der Folie befindlichen Zylinderlinsen bedruckt und geschnitten wird. Zur besseren Führung der Folie wird die Folie an den Führungsrollen 12 und 17, vorzugsweise um 90°, umgelenkt, um einen möglichst großen Umschlingungswinkel zu erhalten.

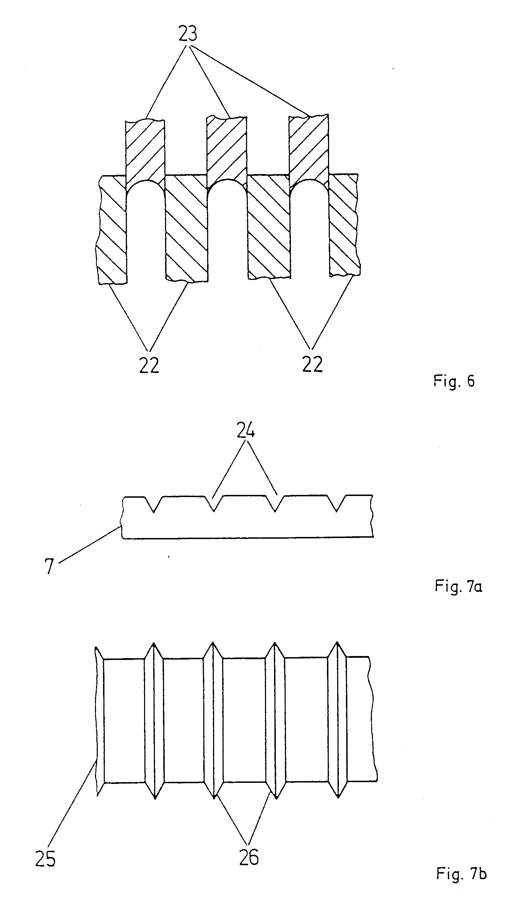

Die Fig. 6 zeigt eine vorzugsweise verwendete Schneideeinrichtung 18, mit Hilfe der die Folienbahn in einzelne schmale Streifen geschnitten wird. Die Schneideeinrichtung besteht aus jeweils mehreren auf zwei drehbaren Achsen gelagerten Messerscheiben 22, 23, die ineinander eingreifen. Die Breite der Scheiben entspricht der gewünschten Fadenbreite. Um die Linsenstruktur auf der Folie nicht zu zerstören, ist die Stirnseite der Scheiben 23, die mit der geprägten Seite der Folie in Berührung kommen, eingefräst. Gleichzeitig wird durch diese Einfräsung auch die Schneidwirkung der Scheiben erhöht.

Zusätzlich zu den Führungsrollen können z. B. vor den Druck- oder Schneideeinrichtungen mechanische oder auch optische Abtastelemente (in der Fig. nicht gezeigt) vorgesehen werden, die ähnlich einem Tonabnehmersystem in die Rillen zwischen den Zylinderlinsen eingreifen und den Lauf der Folienbahn überwachen. Gegebenenfalls können aufgrund der Abtastsignale kleinere Nachregulierungen im Lauf der Folienbahn vorgenommen werden.

In der hier gezeigten bevorzugten Ausführungsform werden die verschiedenen Bearbeitungsvorgänge wie Prägen, Drucken und Schneiden direkt hintereinander ausgeführt. Die einzelnen Bearbeitungsvorgänge können aber auch räumlich und zeitlich voneinander unabhängig vorgenommen werden. Hierzu wird die zum Teil bereits überarbeitete Folie auf Speicherrollen aufgerollt und bis zum nächsten Bearbeitungsvorgang zwischengespeichert. Da die Folie im ersten Bearbeitungsvorgang mit dem Linsenraster ausgestattet wird und die nachfolgenden Vorgänge anhand dieses Linsenrasters gesteuert werden, ist eine Trennung der einzelnen Bearbeitungsvorgänge problemlos möglich.

Nach diesem Verfahren ist es somit möglich, schmale Streifen oder Fäden herzustellen, die ein Druckbild aufweisen, das über große Längen registergenau, d. h. in Längsrichtung des Streifens exakt positioniert verläuft und zudem exakt zu den äußeren Abmessungen des Fadens bzw. zum Zentrum des Fadens plaziert ist.

Bei der Papierbahnherstellung werden Sicherheitsfäden kontinuierlich in die blattbildende Faserschicht oder zwischen zwei noch feuchte Papierlagen eingebettet. Da dieser Vorgang so wenig wie möglich unterbrochen werden soll, ist es gerade hier erforderlich, daß die Fäden in entsprechend großen Längen (mehrere Kilometer) vorliegen. Das heißt aber, daß die Fäden über die gleichen Strecken registergenau zu den Zylinderlinsen bedruckt und geschnitten werden müssen. Durch das erfindungsgemäße Verfahren können diese Anforderungen erfüllt werden, wodurch der Weg eröffnet wird, die beschriebenen optischen Effekte zur fälschungssicheren Gestaltung von Sicherheitsfäden auszunutzen, wobei diese Effekte einfach und ohne optische Hilfsmittel prüfbar und nur mit hohem technologischen Aufwand nachahmbar sind.

Dieses Verfahren kann aber ebenso auch zur Herstellung von Fäden Anwendung finden, die lediglich auf einer Seite ein längs des Fadens verlaufendes Druckmuster oder eine Oberflächenstruktur und auf der Gegenseite eine glatte Oberfläche aufweisen sollen.

Wie in der Fig. 7a gezeigt, werden dazu in die Folienbahn 7 in bestimmten Abständen, die z. B. der späteren Fadenbreite oder einem ganzzahligen Vielfachen davon entsprechen, Rillen 24 eingeprägt, die längs der Folienbahn verlaufen. Zur weiteren Bearbeitung wird die Folie über Führungsrollen 25 (Fig. 7b), in die wiederum das negative Rillenmuster 26 eingearbeitet ist, ausgerichtet und justiert, so daß ein exaktes Bedrucken, Prägen, Fräsen und/oder Schneiden in Abhängigkeit der Lage der Rillen ermöglicht wird. Diese Rillen können auch so tief ausgebildet sein, daß sie gleichzeitig als Reißlinien dienen, entlang derer die Folie nach der Bearbeitung in einzelne Streifen getrennt werden kann. Das erfindungsgemäße Verfahren zur registergenauen Bearbeitung von Folien kann auch dazu verwendet werden, zwei und mehr Folien in exakter, gegenseitigen Ausrichtung übereinander zu lagern und anschließend zu verkleben bzw. verschweißen oder auf eine z. B. bereits mit einem Druckbild versehene Unterlage aufzubringen.

## Patentansprüche

1. Verfahren zur registergenauen Bearbeitung von Folien, wobei die Bearbeitung mindestens zwei voneinander unabhängige Bearbeitungsvorgänge umfaßt und die Bearbeitung der Folie ab dem zweiten Bearbeitungsvorgang registergenau zum ersten Bearbeitungsvorgang ausgeführt wird, wobei in einem ersten Bearbeitungsschritt in die Folie (7) eine mechanisch abgreifbare Reliefstruktur (4, 24) eingebracht wird, dadurch **gekennzeichnet,** daß in wenigstens einem weiteren Bearbeitungsschritt zumindest Teile dieser Reliefstruktur (4, 24) als Führungselemente für die registergenaue Bearbeitung der Folie (7) verwendet werden, wobei die verwendeten Elemente (12, 17, 25) zur Führung der Folie (7) an ausgewählten Stellen mit einer zu der Reliefstruktur (4, 24) der Folie (7) negativen Reliefstruktur (21, 26) ausgestattet sind, die mit der Reliefstruktur (4, 24) der Folie in Eingriff gebracht wird und so eine Ausrichtung der Folie (7) bewirkt.

2. Verfahren nach Anspruch 1, dadurch **gekennzeichnet,** daß die Folie (7) nach dem ersten Bearbeitungsschritt Druck-, Trenn-, Fräs- und/oder Prägevorrichtungen zugeführt wird.

3. Verfahren nach einem der Ansprüche 1 oder 2, dadurch **gekennzeichnet,** daß in dem ersten Bearbeitungsschritt in die Folie ein Raster aus mehreren parallel nebeneinander angeordneten Zylinderlinsen (4) eingeprägt wird.

4. Verfahren nach Anspruch 3, dadurch **gekennzeichnet,** daß in einem der weiteren Bearbeitungsschritte auf die den Zylinderlinsen (4) gegenüberliegende Oberfläche der Folie (7) registergenau zu den Zylinderlinsen (4) ein oder mehrere Druckmuster, bestehend aus mehreren zu den Zylinderlinsen parallel laufenden aufgedruckten Streifen (a, b, c), so aufgebracht werden, daß diese Streifen aufgrund der fokussierenden Wirkung der Zylinderlinsen unter verschiedenen Betrachtungswinkeln getrennt sichtbar sind.

5. Verfahren nach Anspruch 3, dadurch **gekennzeichnet,** daß die Folie (7) in einem der weiteren Bearbeitungsschritte mittels zweier ineinandergreifender Messerwalzen, bestehend aus mehreren Einzelscheiben (22, 23), in einzelne Streifen (19) geschnitten wird, wobei die Stirnseiten der Scheiben, die mit der geprägten Folienseite in Berührung kommen, auf die Zylinderlinsenprofile abgestimmte Vertiefungen aufweisen.

6. Verfahren nach wenigstens einem der Ansprüche 1 bis 5, dadurch **gekennzeichnet,** daß die Folie (7) in einem der weiteren Bearbeitungsschritte in mehreren Stufen bedruckt wird, wobei die einzelnen Druckwerke für die einzelnen Stufen Vorrichtungen mit dem entsprechenden Negativrillenmuster (26) zur Führung der Folie (7) enthalten.

7. Verfahren nach Anspruch 6, dadurch **gekennzeichnet,** daß die Folie (7) in den einzelnen Stufen mit verschiedenen Farben bedruckt wird.

8. Verfahren nach wenigstens einem der Ansprüche 1 bis 7, dadurch **gekennzeichnet,** daß die Folie (7) in einem der weiteren Bearbeitungsschritte mit einem Mikrodruck bedruckt wird.

## Claims

1. A method for processing films in exact register, said processing including at least two mutually independent processing operations and the film being processed as of the second processing operation in exact register with the first processing operation, a relief structure (4, 24) capable of being picked up mechanically being incorporated in the film (7) in a first processing step, **characterized** in that at least parts of this relief structure (4, 24) are used as guide elements for processing the film (7) in exact register in at least one further processing step, the elements (12, 17, 25) used for guiding the film (7) being equipped at selected places with a relief structure (21, 26) which is negative with respect to the relief structure (4, 24) of the film (7) and is engaged with the relief structure (4, 24) of the film thereby aligning the film (7).

2. The method of claim 1, characterized in that the film (7) is fed after the first processing step to printing, separating, milling and/or impressing means.

3. The method of claim 1 or 2, characterized in that a screen consisting of a plurality of cylinder lenses (4) disposed parallel one beside the other is impressed in the film in the first processing step.

4. The method of claim 3, characterized in that one or more printed patterns, consisting of a plurality of stripes (a, b, c) printed parallel to the cylinder lenses, are provided, in one of the further processing steps, on the surface of the film (7) opposite the cylinder lenses (4) so as to register exactly with the cylinder lenses (4), in such a way that these stripes are visible separately at different viewing angles due to the focusing effect of the cylinder lenses.

5. The method of claim 3, characterized in that in one of the further processing steps the film (7) is cut into individual strips (19) by means of two meshing cutter blocks comprising a plurality of individual disks (22, 23), the front of the disks which come in contact with the impressed side of the film having depressions coordinated with the cylinder lens profiles.

6. The method of at least one of claims 1 to 5, characterized in that the film (7) is printed in several stages in one of the further processing steps, the individual printing units for the individual stages containing apparatus with the corresponding negative groove pattern (26) for guiding the film (7).

7. The method of claim 6, characterized in that the film (7) is printed with different colors in the individual stages.

8. The method of at least one of claims 1 to 7, characterized in that the film (7) is printed with a microprint in one of the further processing steps.

**Revendications**

1. Procédé de façonnage de feuilles en correspondance précise, dans lequel le façonnage comprend au moins deux étapes ou processus de façonnage indépendants l'un de l'autre, le façonnage de la feuille étant réalisé à partir de la deuxième étape ou du deuxième processus de façonnage en correspondance précise avec la première étape ou le premier processus de façonnage, dans lequel, au cours d'une première étape de façonnage, on réalise que la feuille (7) a une structure en relief (4, 24) palpable mécaniquement, caractérisé en ce que l'on utilise au cours d'au moins une autre étape de façonnage au moins une partie de cette structure en relief (4, 24) comme élément de guidage pour le façonnage en correspondance précise de la feuille (7), les éléments utilisés (12, 17, 25) pour le guidage de la feuille (7) étant munis en des emplacements choisis d'une structure en relief (21, 26) en négatif par rapport à la structure en relief (4, 24) de la feuille (7) et qui est amenée en contact avec la structure en relief (4, 24) de la feuille et provoque ainsi une orientation en direction de la feuille (7).

2. Procédé selon la revendication 1, caractérisé en ce que la feuille (7) est amenée après la première étape de façonnage à des dispositifs de pressage, de séparation, de fraisage et/ou de matriçage.

3. Procédé selon l'une des revendications 1 ou 2, caractérisé en ce que, au cours de la première étape de façonnage, on empreint sur la feuille un réseau de plusieurs lentilles cylindriques (4) disposées parallèlement les unes aux autres.

4. Procédé selon la revendication 3, caractérisé en ce que, au cours de l'une des autres étapes de façonnage, on dispose sur la surface de la feuille (7) opposée aux lentilles cylindriques (4), en correspondance précise avec les lentilles cylindriques (4), un ou plusieurs motifs se composant de plusieurs bandes imprimées (a, b, c) courant parallèlement aux lentilles cylindriques, de telle façon que les bandes soient visibles séparément, grâce à l'effet focalisant des lentilles cylindriques, sous divers angles de vision.

5. Procédé selon la revendication 3, caractérisé en ce que l'on découpe la feuille (7), au cours d'autres étapes de procédé, à l'aide de deux rouleaux de coupe s'engageant en contact l'un de l'autre et constitués de plusieurs disques individuels (22, 23), en bandes individuelles (19), les faces latérales des disques venant en contact avec la face de la feuille munie d'impressions présentant des parties en creux adaptées au profil des lentilles cylindriques.

6. Procédé selon au moins l'une des revendications 1 à 5, caractérisé en ce que la feuille (7) est imprimée au cours de l'une des autres étapes de façonnage, en plusieurs passages, les groupes d'impression individuelle pour les passages individuels comportant des dispositifs munis du motif de nervure négatif correspondant (26) pour le guidage de la feuille (7).

7. Procédé selon la revendication 6, caractérisé en ce que la feuille (7), au cours des passages individuels, est imprimée en différentes couleurs.

8. Procédé selon au moins l'une des revendications 1 à 7, caractérisé en ce que l'on applique à la feuille (7), au cours de l'une des autres étapes de façonnage, une micro-impression.

Fig.1

β

α

γ

4

d~f

c)   b)   a)

5

Fig. 2

4

A                              B

6        2

Fig. 3

Fig. 4

Fig. 5a

Fig. 5b

Fig. 6

Fig. 7a

Fig. 7b